# EUROPEAN PATENT APPLICATION

(11) **EP 4 817 911 A1**
(43) Date of publication of application: **07.10.2026**
(21) Application number: 26166038.5
(22) Date of filing: 19.03.2026
(51) Int. Cl.: B60H 1/32

(54) **ELECTRIC VEHICLE COMPRESSOR WASTE HEAT APPLICATIONS**

(30) Priority: 04.04.2025 US 202519171049
(71) Applicant: Tesla, Inc., Austin, TX 78725 (US)
(72) Inventor: TAYAL, Shashank, Austin, TX, 78725 (US); HORVATIC, Neven, Austin, TX, 78725 (US); VARATHARAJAN, Anantaram, Austin, TX, 78725 (US); ZHU, Jingwei, Austin, TX, 78725 (US); PATANKAR, Aniket, Austin, TX, 78725 (US); MARTIN, Tucker, Austin, TX, 78725 (US)
(74) Representative: Liesegang, Eva

(57) **Abstract**

The present disclosure relates to a thermal management system for electric vehicles including a compressor, the compressor comprising a compressor motor and an inverter. The system collects and distributes heat generated by the compressor to various applications, such as cabin heating, battery heating, or cooling. The compressor can be controlled to operate in multiple modes, including waste heat mode, TIM health detection mode, liquid reduction mode, and liquid pump-out mode. Heat generation is achieved through methods such as commanding increased current, modifying inverter switching frequency, and injecting high frequency current. A controller regulates system operations based on input data.

## Description

### BACKGROUND

### TECHNICAL FIELD

The present disclosure relates to heating systems for use in automotive vehicles, and more particularly, to methods of generating heat from electric vehicle components for various applications in an electric vehicle.

### DESCRIPTION OF RELATED ART

Heat pumps are increasingly being used for efficient heating and cooling in various applications, including buildings, industrial processes, and vehicles. Heat pumps can be more efficient than other types of heating systems because they can transfer heat from one location to another as opposed to generating heat.

With respect to vehicles, heat pumps can be used to extract heat from the outside air, the powertrain, or the battery to help heat the cabin or maintain a certain battery temperature range. In electric vehicles, heat pumps may be especially useful since the vehicles do not have an internal combustion engine from which to source heat.

### BRIEF DESCRIPTION OF THE DRAWINGS

Figure 1 illustrates an example schematic diagram illustrating a vehicle thermal management system of an electric vehicle.
Figure 2 illustrates a block diagram of an example thermal management system of an electric vehicle.
Figure 3 illustrates a perspective view of an example compressor included in a thermal management system of an electric vehicle.
Figure 4 illustrates a flowchart of an example process for a controller to determine an operating mode and take action based on the current operating mode.
Figure 5A illustrates a flowchart of an example process by a controller for a waste heat mode.
Figure 5B illustrates an example heat flow and fluid flow in an example waste heat mode.
Figure 5C illustrates a section view of an example heat flow and fluid flow in an example waste heat mode.
Figure 6A illustrates a flowchart of an example process by a controller for an example thermal interface material (TIM) health detection mode.
Figure 6B illustrates an example heat flow in an example TIM health detection mode.
Figure 6C illustrates a section view of an example heat flow in an example TIM health detection mode.
Figure 7A illustrates a flowchart of an example process by a controller for an example liquid reduction mode.
Figure 7B illustrates an example heat flow and fluid flow through an example compressor in an example liquid reduction mode.
Figure 8A illustrates a flowchart of an example process by a controller for an example liquid pump out mode.
Figure 8B illustrates an example heat flow and refrigerant flow through an example compressor in an example liquid pump out mode.
Figure 9 illustrates a block diagram of an example vehicle including a compressor.

Embodiments of the present disclosure and their advantages are best understood by referring to the detailed description that follows. It should be appreciated that like reference numerals are used to identify like elements illustrated in one or more of the figures, wherein showings therein are for purposes of illustrating embodiments of the present disclosure and not for purposes of limiting the same.

### DETAILED DESCRIPTION

The disclosed technology relates to thermal management systems, for example, that of an electric vehicle. A thermal management system can be used to control the heating and cooling of various components of a vehicle, such as a cabin, a battery, and/or powertrain components. The thermal management system can include a heat pump system that circulates refrigerant to transfer heat throughout the vehicle, for example to the cabin via a heating, ventilation and air conditioning (HVAC) case. In the heat pump system, a compressor can be used to pressurize and circulate the refrigerant. A compressor can be a component configured to perform work on a fluid passing through the compressor to increase the pressure of the fluid. For example, a compressor may include a motor configured to cause the fluid to be compressed and an inverter configured to control the motor. In operation, the motor and/or the inverter of the compressor may have losses in the form of heat, which can be circulated through the vehicle by the vehicle thermal management system. As will be described herein, a controller can be configured to cause the compressor to use at least a portion of the electrical energy provided to the compressor for the purpose of generating heat. In some embodiments, the controller can be configured to cause the compressor to operate inefficiently such that at least a portion of the electrical energy provided to the compressor is purposefully dissipated as heat. Waste heat may reflect heat in excess of what the compressor would typically or nominally generate when operating efficiently. Waste heat generated by the compressor can be used for various applications, for example, to supplement the vehicle's heating capacity, to test the health of a thermal interface material (TIM), to improve compressor reliability by reducing the compressor inlet liquid content, and to prevent liquid from damaging the compressor.

An example thermal management system in a vehicle can include a heat pump system. As described herein, the heat pump system can be used to transport a fluid, such as refrigerant, throughout the vehicle to transfer heat. The thermal management system can also include one or more coolant loops. For example, one coolant loop may be in thermal communication with the vehicle's battery, and another coolant loop can be in thermal communication with the vehicle's powertrain components. Each of the one or more coolant loops can be in thermal communication with each other and with the heat pump system to transfer heat throughout the vehicle.

In some embodiments, the vehicle can include a valve that controls the configuration of the coolant loops and enables complex routing of heat through the vehicle. The valve can have one or more input ports and one or more output ports and can be configured to connect any of the input ports to any of the output ports to form one or more configurations of the coolant loops. In some embodiments, there may be eight ports and may reflect an octovalve, which is described in more detail in U.S. Patent Pub. 2024/0278617 and incorporated herein by reference in its entirety. For example, the battery coolant loop and the powertrain coolant loop can be configured to operate in series with each other to cool the battery, the powertrain, and the cabin. In some embodiments, the battery coolant loop and the powertrain coolant loop can be configured to operate in parallel with each other to allow for cabin heating and battery and powertrain cooling. The thermal management system can include a controller that can be configured to control which input ports are fluidly connected to which output ports and can be configured to control any of the components of the thermal management system.

The heat pump system can include a compressor that pressurizes the refrigerant and causes the refrigerant to circulate throughout the heat pump system. The compressor can include a motor to power the compressor, and an inverter to control the motor. In operation, both the motor and the inverter can generate heat. For example, the motor can generate heat due to electrical resistance in the motor windings, and the inverter can generate heat due to switching frequencies in its transistors. This heat generated by the compressor can be captured by refrigerant flowing through the compressor, which can then be circulated throughout the vehicle via the heat pump system and the one or more coolant loops.

As will be disclosed herein, a compressor, such as scroll compressor 110, can be controlled to operate inefficiently and thus generate waste heat (e.g., heat in excess of what the compressor would generate when operating efficiently). As will be described, there are example techniques by which the compressor can be controlled to generate waste heat. For example, and without limitation, the compressor can be controlled to command additional current (e.g., compared to efficient operation) while outputting a constant torque. In some embodiments, the switching frequency of the transistors can be controlled and optimized to generate additional heat. In some embodiments, high frequency current can be injected into the motor to generate waste heat. The additional heat may be used, for example, to supplement cabin heating in extreme cold conditions, to reduce the liquid content of the scroll, and/or to test the health of a thermal interface material (TIM) included in the compressor described herein.

Electric vehicles face various problems that give rise to applications for excess or waste heat generated by the compressor. For example, in winter and extreme cold weather conditions, little to no heat can be sourced from the ambient air or from the powertrain. This may be because the ambient temperature is too low to be a sufficient source of heat, and the powertrain may not generate sufficient heat to comfortably heat the cabin. Additionally, the battery may not generate sufficient heat to comfortably heat the cabin. A thermal management system may address this problem by including an electric heater, but an electric heater can add additional cost and complexity to the thermal management system. Advantageously, generating excess heat from the compressor may eliminate the need for such an electric heater. The compressor may be operated as a heater so that the thermal management system provides heat at COP = 1, meaning that the compressor converts electrical energy directly into heat. Coefficient of performance (COP) is a measure of efficiency of a heating or cooling system, where COP = 1 means that the system converts all electrical energy into heat. Excess heat generated by the compressor may be captured by the refrigerant and transferred to the cabin, battery, or powertrain via the heat pump system and coolant loops.

Additionally, the thermal management system can include an inverter, which may be configured to control an electric motor of the compressor. The inverter may generate heat, which may be transferred away from the inverter via the thermal interface material (TIM) described herein. For example, the TIM may be located between the inverter and the compressor housing. In this example, the TIM may transfer heat generated by the inverter toward the compressor body into the refrigerant which is passing through the compressor.

Multiple problems can arise with the TIM. For example, the TIM may be faulty when the TIM and/or the compressor are initially manufactured. This can result in poor thermal conductivity, which may lead to overheating of the inverter, which can cause reduced efficiency of the compressor or even failure. Additionally, the TIM can degrade over time due to thermal cycling.

Advantageously, generating excess heat from the compressor can allow for testing the health of the TIM. For example, when excess heat is generated by the compressor, temperature differentials can be measured and compared to threshold values to determine whether the TIM is effectively transferring heat or not. For example, when waste heat is generated in the inverter, if a thermistor proximal to the inverter measures an increase in temperature that is greater than a threshold value indicative of TIM health, it may be concluded that the TIM is faulty or not sufficiently healthy. Testing the TIM can allow for mitigation measures and inform long-term design solutions. For example and without limitation, if TIM health detection mode determines that a TIM is faulty, the controller can be configured to reject the part at manufacturing, schedule maintenance, notify a user, and/or operate the system at lower capacity.

Another problem that can arise in thermal management systems is too much liquid content entering the compressor. For example, a thermal management system can include a scroll compressor, which can include a scroll portion that is configured to circulate a fluid, such as refrigerant, throughout a heat pump system. If too much liquid content enters the scroll portion of the compressor, the compressor can become damaged. Advantageously, waste heat generated by the compressor can be used to evaporate any liquid content before it enters the compressor. For example, if the compressor is a scroll compressor, and if the inverter and the compressor motor are upstream from the scroll inlet, the inverter and the compressor can be controlled to generate waste heat, and the waste heat can be used to evaporate or reduce any liquid content in the fluid before it reaches the scroll portion of the compressor.

Another problem can arise if the compressor is not operating and some of the fluid condenses (e.g., due to cold ambient temperatures) into a liquid inside of the compressor. When the fluid condenses, it may increase its liquid content to an amount that could cause damage to the compressor when the compressor resumes operation. Advantageously, the compressor can be controlled to generate waste heat to evaporate or reduce the liquid content of the fluid inside of the compressor. Additionally, the controller may be configured to use one or more sensors to detect whether a fluid has likely condensed to contain a liquid content that could cause damage to the compressor, and may implement a liquid pump out mode to generate waste heat, in which the scroll portion of the compressor may spin slowly while the compressor generates waste heat to help remove the liquid content from the compressor.

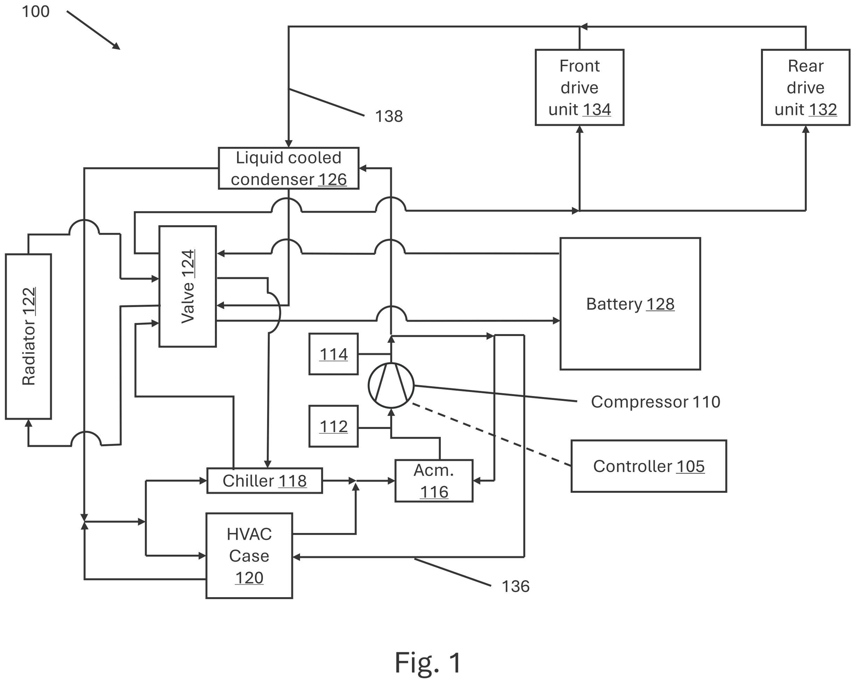

Figure 1 is a schematic diagram illustrating an example vehicle thermal management system 100 of a vehicle of the present disclosure. The thermal management system 100 may be configured to transfer heat to, and from, a cabin, a battery 128, a front drive unit 134, a rear drive unit 132, and/or ambient air 240. The management system may include a heat pump system (e.g., heat pump system 210), one or more coolant loops (e.g., battery coolant loop 220 and/or powertrain coolant loop 230), a valve 124 (e.g., an octovalve) which may be configured to allow the one or more coolant loops to selectively be in thermal communication with each other, and a controller 105. The components of the vehicle thermal management system 100 may be in thermal communication with each other via tubing 136 and/or piping 138, which may be configured to carry refrigerant and/or coolant.

The heat pump system 210 may be configured to transfer heat throughout the vehicle. The heat pump system 210 may include a compressor 110, a cabin heating, ventilation, and air conditioning (HVAC) case 120, a chiller 118, a liquid cooled condenser (LCC) 126, an expansion valve (not shown), an accumulator 116, and/or one or more pressure and/or temperature sensors 112, which may be referred to as components of the heat pump system 210. The components of the heat pump system 210 may be coupled by tubing 136. The heat pump system 210 may include a refrigerant configured to transfer heat throughout the heat pump system 210 via the tubing 136. The HVAC case 120 may include a cabin condenser (not shown) and/or a cabin evaporator (not shown), which may be configured to exchange heat between the refrigerant and the cabin. The HVAC case may be configured to exchange heat between the refrigerant and the cabin air. For example, the condenser may be configured to release heat from the refrigerant into the cabin air, and the evaporator may be configured to absorb heat into the refrigerant from the cabin air. The accumulator can be configured to reduce the amount of liquid entering the compressor 110.

The thermal management system 100 may include one or more coolant loops. The one or more coolant loops may be configured to transfer heat to and from one or more components throughout the vehicle. For example, and without limitation, the one or more coolant loops may be in thermal communication with a radiator 122, a front drive unit 134 and/or the rear drive unit 132, a battery 128, a liquid cooled condenser 126, a chiller 118, and/or one or more pumps (not shown). The one or more coolant loops may comprise piping 138 and coolant configured to carry or transport heat throughout the vehicle via the piping 138. The radiator 122 may be configured to exchange heat with the ambient air. The front drive unit 134 and the rear drive unit 132 may be configured to generate mechanical motion to cause the vehicle to move. The battery 128 may include one or more battery packs, each comprising a multitude of batteries and may be configured to supply electrical power to the components of the vehicle. The liquid cooled condenser 126 and the chiller 118 can each be configured to exchange heat between the refrigerant in the heat pump system 210 and the coolant in the one or more coolant loops.

For example, in some embodiments, a vehicle may include a battery coolant loop 220 and a powertrain (e.g., front drive unit 134, rear drive unit 132) coolant loop 230. The battery coolant loop 220 may be configured to transfer heat to and from the battery 128. The battery coolant loop 220 may include one or more pumps (not shown), one or more structures (not shown) configured to exchange heat with the battery 128, and the chiller 118. The chiller 118 may be configured to exchange heat between the refrigerant and the coolant, which may allow the battery coolant loop 220 to be in thermal communication with the heat pump system 210.

The powertrain coolant loop 230 may be configured to transfer heat to and from the powertrain, such as but not limited to the front drive unit 134 and the rear drive unit 132. The powertrain coolant loop 230 may include one or more pumps, one or more structures (not shown) configured to exchange heat with the front drive unit 134 and/or the rear drive unit 132, and/or a liquid cooled condenser 126. The liquid cooled condenser 126 may be configured to exchange heat between the refrigerant and the coolant, which may allow the powertrain coolant loop 230 to be in thermal communication with the heat pump system 210.

The one or more coolant loops may be connected to a valve 124, which may, in some embodiments, have eight ports (e.g., an octovalve as described herein). The valve 124 may include one or more input ports and one or more output ports. An input port may be configured to allow a fluid to enter the valve 124, and an output port may be configured to allow a fluid to exit the valve 124. The valve 124 may be configured to selectively connect one or more input ports with one or more output ports. For example, the valve may include an actuator (not shown) which may be configured to rotate a stemshell (not shown) within the valve which may control which input ports are in fluid communication with which output ports. The valve may be configured to allow the one or more loops to be in thermal communication with each other. The valve may be configured to form one or more loops by selectively connecting certain input ports and output ports to be in fluid communication with each other. The valve 124 may switch between one or more configurations to selectively transfer heat to various components throughout the vehicle. The one or more configurations of components and loops may be referred to as modes.

For example, and without limitation, the valve 124 may be configured to allow the battery coolant loop 220 to operate in series with the powertrain coolant loop 230, which may be referred to as a series mode. In series mode, the one or more coolant loops may be configured to be in fluid communication with each other to form one continuous loop. In some embodiments, the valve 124 may be configured to allow the battery coolant loop 220 to operate in parallel with the powertrain coolant loop 230. In a parallel mode, the battery coolant loop 220 and the powertrain coolant loop 230 may circulate coolant independently of each other in distinct loops. The one or more valve 124 configurations may include an ambient source mode, in which the radiator 122 may be configured to be in thermal communication with the chiller 118, which may allow the heat pump system 210 to extract heat from the ambient. The one or more valve 124 configurations may include a series radiator bypass mode, in which the battery coolant loop 220 and the powertrain coolant loop 230 may be in thermal communication with each other, but where the coolant bypasses the radiator 122 to retain heat rather than dissipate it.

The thermal management system 100 may include a controller 105. For example, the controller 105 may represent a processor, ASIC, and so on, which may leverage information to control the components of the thermal management system 100. The controller 105 may be configured to control the valve 124 to operate in the one or more modes. For example, the controller 105 may be configured to selectively connect the one or more input ports to the one or more output ports. In some embodiments, the controller 105 may be configured to control the valve 124 to cause the one or more coolant loops to operate in a series mode, in a parallel mode, in an ambient source mode, or in a series radiator 122 bypass mode. The controller 105 may be configured to control and/or communicate with any of the components of the thermal management system 100. For example, without limitation, the controller 105 may be configured to control the compressor 110, and may be configured to receive information from the one or more sensors 112.

Further description related to the thermal management system 100 is included in U.S. Patent No. 10,967,702, and U.S. Patent Pub. 2024/0278617, which are hereby incorporated herein by reference in their entirety.

A thermal management system 100 may include additional or fewer components than those illustrated in Figures 1-2, and may have a different configuration than illustrated in Figures 1-2. For example, the configuration illustrated in Figure 1 may correspond to an ambient source mode, in which the radiator 122 may be configured to source heat from the ambient air 240 and transfer the heat to the refrigerant via the chiller 118. The thermal management system 100 may be configured to operate in many different modes or configurations, such as but not limited to a series mode, a parallel mode, or a series radiator 122 bypass mode.

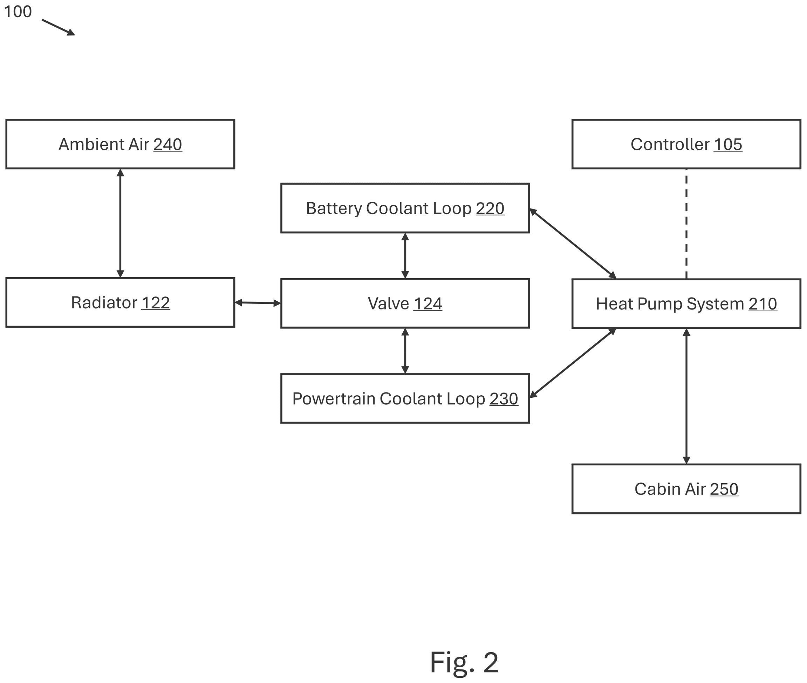

Figure 2 is a block diagram illustrating an example vehicle thermal management system 100. A vehicle thermal management system 100 may include a heat pump system 210, a battery coolant loop 220, a powertrain coolant loop 230, a valve 124, and/or a controller 105.

The heat pump system 210 may be configured to exchange heat with the ambient air 240, the cabin air 250, the battery coolant loop 220, and/or the powertrain coolant loop 230. The battery coolant loop 220 may include the battery 128 and may be configured to exchange heat between the battery, the heat pump system 210, and the powertrain coolant loop 230. The powertrain coolant loop 230 may include the front drive unit 134 and/or the rear drive unit 132 and may be configured to exchange heat between the front drive unit 134 and/or the rear drive unit 132, the heat pump system 210, and the battery coolant loop 220.

The thermal management system 100 may include a valve 124, which may be configured to allow the battery coolant loop 220 to be in thermal and/or fluid communication with the powertrain coolant loop 230. For example, and without limitation, the valve 124 may allow the battery coolant loop 220 and the powertrain coolant loop 230 to operate in series or in parallel with each other. The valve 124 may be configured to fluidly connect one or more input ports with one or more output ports to form one or more loops to transfer heat throughout the vehicle. In some embodiments, the thermal management system 100 may include a radiator 122, which may be configured to exchange heat with the ambient air 240.

While the controller 105 is illustrated as being connected to the heat pump system 210, the controller may be connected to or in communication with any of the components of the thermal management system 100. For example, and without limitation, the controller may be connected to the valve 124 to control which input ports are fluidly connected to which output ports, with the one or more sensors 112 to receive measurements, and/or with one or more pumps, and so on.

The vehicle thermal management system 100 can be configured to collect and transfer heat generated by various components of the vehicle. For example, the vehicle thermal management system 100 may be configured to control the compressor 110 to generate excess heat and to transfer the generated heat throughout the vehicle. The compressor 110 may be configured to operate in an efficient mode, in which the compressor 110 may generate a certain measure of heat (e.g., up to a threshold measure).

The compressor 110 may be configured to receive electrical power and output mechanical power via the motor 316. In operation, the motor 316 and/or the inverter 320 of the compressor 110 may have losses, which may be dissipated as heat. In an efficient mode, the compressor 110 may have an efficiency above a threshold efficiency (see example values below). In an excess heat mode, the compressor can be controlled to operate inefficiently such that the motor and/or the inverter have increased losses and generate excess heat. In an excess heat mode, the compressor 110 may have an efficiency below a threshold efficiency (see example values below). Efficiency may be calculated as the mechanical power output divided by the electrical power input.

For example and without limitation, the compressor motor 316 may be configured to deliver 8.5 kW or approximately 8.5 kW of mechanical power, or in a range from 6 kW or approximately 6 kW to 10 kW or approximately 10 kW, or from 3.5 kW or approximately 3.5 kW to 12.5 kW or approximately 12.5 kW, or any value, approximate value, or range of values within the foregoing ranges. In operation, the motor 316 and/or the inverter 320 may have losses in the form of heat. When operating in an efficient mode, the motor 316 may have losses of 1 kW or approximately 1 kW, or in a range from 750 W or approximately 750 W to 1.25 kW or approximately 1.25 kW, or from 500 W or approximately 500 W to 1.5 kW or approximately 1.5 kW, or any value, approximate value, or range of values within the foregoing range. When operating in an efficient mode, the inverter 320 may have losses of 140 W or approximately 140 W, or in a range from 100 W or approximately 100 W to 180 W or approximately 180 W, or in a range from 60 W or approximately 60 W to 120 W or approximately 120 W, or any value, approximate value, or any ranges of values within the foregoing ranges. Accordingly, when operating in an efficient mode, the compressor 310 may have an efficiency (which may be referred to as a threshold efficiency for an efficient mode) of 88% or approximately 88%, or in a range from 84% or approximately 84% to 92% or approximately 92%, or from 80% or approximately 80% to 96% or approximately 96%, or any value, approximate value, or range of values within the foregoing ranges. The efficiency can be calculated by dividing the mechanical power output by the total electrical power input.

The motor 316 and/or the inverter 320 of the compressor 110 can be controlled to operate inefficiently to increase losses to generate excess heat. When operating inefficiently, which may be referred to as an excess heat mode, the compressor motor 316 may have losses of 1.7 kW or approximately 1.7 kW, or in a range from 1.4 kW or approximately 1.4 kW to 2.0 kW or approximately 2.0 kW, or from 1.1 kW or approximately 1.1 kW to 2.3 kW or approximately 2.3 kW, or any value, approximate value, or range of values within the foregoing ranges. When operating inefficiently, the inverter 320 may have losses of 250 W or approximately 250 W, or in a range from 200 W or approximately 200 W to 300 W or approximately 300 W, or from 150 W or approximately 150 W to 350 W or approximately 350 W, or any value, approximate value, or range of values within the foregoing ranges. Accordingly, when operating in an excess heat mode, the compressor 110 may have an efficiency of 81% or approximately 81%, or in a range from 77% or approximately 77% to 85% or approximately 85%, or from 73% or approximately 73% to 89% or approximately 89%. In some embodiments, in an excess heat mode, the compressor 110 may be configured to have 100% inefficiency or approximately 100% inefficiency, or 0% efficiency or approximately 0% efficiency, meaning that all or almost all the electrical power provided to the compressor is lost as heat. An excess heat mode may be defined as a mode in which the compressor operates at an efficiency less than a threshold efficiency, which can be 88% or approximately 88%, or a range from or in a range from 84% or approximately 84% to 92% or approximately 92%, or from 80% or approximately 80% to 96% or approximately 96%, or any value, approximate value, or range of values within the foregoing ranges.

The compressor 110 may be configured to operate in an excess heat mode, in which the compressor 110 may be configured to generate a greater measure of heat than when operating in the efficient mode (e.g., greater than the threshold measure). Heat may be generated from the compressor 110 using various methods and the controller 105 may have multiple applications for the heat generated by the compressor 110, as will be described herein.

The controller 105 may be configured to determine when to activate one or more of a plurality of modes (also referred to herein as operating modes), with the modes corresponding to various applications of the excess heat generated by the compressor 110. Throughout this disclosure, the term "mode" may be used to refer to an operating condition of the compressor 110, and/or of the vehicle thermal management system 100. For example, and without limitation, it may be said that the compressor 110 operates in a certain mode, such as a waste heat mode, or that the vehicle thermal management system 100 operates in a certain mode.

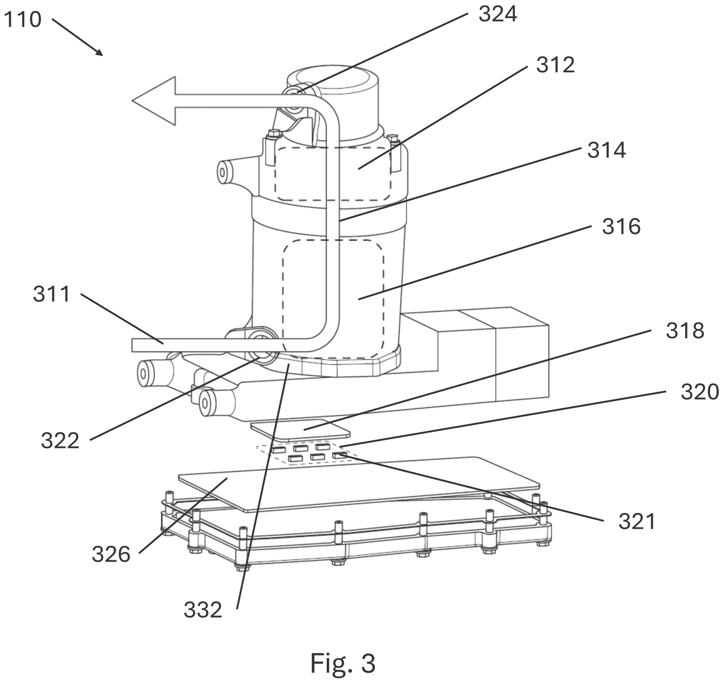

Figure 3 illustrates an example compressor 110 included in an example vehicle thermal management system 100. Compressor 110 may include an inlet 322 and an outlet 324. The compressor 110 may be configured to receive fluid 311 through the inlet 322, and output, discharge or release fluid 311 through the outlet 324. The fluid 311 may be refrigerant. The refrigerant may be, without limitation, R134a, R1234yf, or other types of refrigerants. The fluid 311 may pass through the compressor 110, and throughout the heat pump system 210 via the tubing 136. The compressor 110 can be configured to pressurize the fluid 311 and to circulate the fluid 311 throughout the heat pump system 210.

In some embodiments, the compressor 110 may be a scroll compressor. For example, the compressor 110 may include a scroll portion 312, a shaft 314, and a compressor motor 316. The scroll portion 312 may include one or more interleaving scrolls (not shown). In operation of the compressor 110, one scroll (not shown) may be fixed while another scroll (not shown) can move in a circular motion, without rotating, relative to the fixed scroll to trap pockets of fluid and push them towards the center of the scroll, compressing the fluid. The scroll portion 312 may be connected to the compressor motor 316 via the shaft 314. The compressor motor 316 may control or direct the motion of one or more of the scrolls in the scroll portion 312 via the shaft 314. In some embodiments, the compressor 110 may be a different type of compressor.

While a scroll compressor is described herein, as may be appreciated other compressors or types of compressors may be used and fall within the scope of the disclosure. For example, the compressor may be a reciprocating compressor (e.g., a piston compressor). As another example, the compressor may be a rotary compressor (e.g., a rotary screw compressor). Thus, different compressors or types of compressors may be used to generate waste heat. Additionally, different compressors or types of compressors may implement the modes described herein (e.g., waste heat mode, thermal interface material health detection mode, liquid reduction mode, and/or liquid pump out mode.)

The compressor motor 316 may be an electric induction motor, a permanent magnet motor, or another type of motor. The compressor motor 316 may be configured to cause the shaft 314 to transmit motion to one or more of the scrolls in the scroll portion 312. The compressor motor 316 may include one or more windings (not shown), which may be one or more wires wound in a pattern to create an electromagnetic field. The windings may be in direct or indirect contact with the fluid 311 when the fluid 311 passes through the compressor, which may allow the windings to transfer heat to the fluid 311. In some embodiments, the scroll portion 312 may be upstream of the compressor motor 316 such that a fluid 311 can pass by the compressor motor 316, and its windings, before passing through the scroll portion 312.

The compressor 110 may be controlled by an inverter 320. The inverter 320 may be connected to or on a printed circuit board assembly (PCB) 326. The inverter 320 may be configured to convert direct current from the battery 128 into alternating current to drive the compressor motor 316. The inverter 320 may include one or more transistors, which can be insulated-gate bipolar transistors (IGBTs), metal-oxide-semiconductor field-effect transistors (MOSFETS) 321, or other types of transistors.

The PCB 326 may include a thermal interface material (TIM) 318. The TIM 318 may be a material configured to improve heat transfer from electronic components, such as the MOSFETS 321. For example, and without limitation, the TIM 318 may be configured to transfer heat generated by the MOSFETS into the refrigerant flowing through the compressor.

The compressor 110 may have a compressor body 332 surrounding and enclosing the compressor 110. The compressor body 332 may separate the fluid 311 within the compressor 110 from an exterior of the compressor 110. Heat that is generated by the inverter 320 may transfer through the TIM 318 and through the compressor body 332 before transferring to the fluid 311 within the compressor 110.

In some embodiments, the controller 105 may be configured to control the compressor 110 to generate heat in excess of what the compressor 110 would generate if operating efficiently. For example, the controller 105 may be configured to control the compressor 110 to operate inefficiently to generate additional heat, which may be transferred to the refrigerant passing through the compressor 110.

There may be one or more techniques to generate excess heat from the compressor 110. In one example, the compressor 110 may generate heat by commanding a higher current than the compressor 110 would normally command when operating in an efficient mode. In some embodiments, the controller 105 may control the compressor motor 316 to command more current from the controller 105 and/or the battery 128 without producing more torque. In other words, the controller 105 may cause the compressor 110 to command more current while producing the same torque that the compressor 110 would generate in an efficient mode. For example, when the compressor 110 is operating in efficient mode, the compressor motor 316 may aim to operate at a maximum torque per amps (MTPA) to minimize copper losses and maximize efficiency. However, more current can be drawn for a given torque by using either a flux strengthening or a flux weakening method.

In some embodiments, the controller 105 may control the compressor motor 316 to draw more current using either flux strengthening or flux weakening. In a flux weakening method, the controller 105 can control the compressor 110 to command more current by decreasing a stator flux linkage. The controller 105 may be configured to decrease the stator flux linkage while maintaining a constant torque output of the compressor motor 316. This may result in an output torque that is equivalent to what the compressor motor would produce in an efficient mode, but while commanding more current. Similarly, in a flux strengthening method, the controller 105 can control the compressor 110 to command more current by increasing stator flux linkage. The controller 105 may be configured to increase stator flux linkage while maintaining a constant torque output of the compressor motor 316. This may result in an output torque that is equivalent to what the compressor motor 316 would produce in an efficient mode, but while commanding more current. Decreasing the stator flux linkage refers to reducing the strength of the magnetic field generated by the motor windings. Increasing the stator flux linkage refers to enhancing the strength of the magnetic field generated by the motor windings. In a d-q reference frame (not shown), where d-axis current controls magnetic flux, and q-axis current controls torque production, flux weakening refers to applying a negative d-axis current, and flux strengthening refers to applying a positive d-axis current.

The controller 105 may be configured to control the compressor to command a higher current, and thus generate heat, by using either flux weakening or flux strengthening, while still outputting the same torque that the compressor motor 316 would output if the compressor 110 were running efficiently. This method is not limited to flux strengthening and/or flux weakening. For example, and without limitation, the controller 105 may use other means or methods to draw additional current to the compressor motor 316 to generate additional heat.

In another example, the compressor 110 may generate heat from the inverter 320. For example, and without limitation, the controller 105 may modify the switching frequency of the one or more transistors in the inverter 320. For example, increasing the switching frequency of the one or more MOSFETS 321 may generate additional heat from the inverter 320. However, in some embodiments, increasing the switching frequency may not increase the total losses, or total heat generated from the compressor 110. For example, when the switching frequency is decreased, which may result in less heat generated from the inverter 320, compressor motor 316 losses may increase in an amount that leads to an increased total loss, or total heat generated, where total loss refers to the total amount of heat generated by both the inverter 320 and the compressor motor 316.

Accordingly, a lookup table (not shown) may be accessed and optionally generated to determine the total heat generation for given switching frequencies. For example, switching frequencies may be adjusted, and the heat generated from the inverter 320 and the compressor motor 316 may be recorded for each switching frequency. A lookup table may include one or more rows which specify switching frequencies, measures of heat generated by the inverter 320 for the switching frequencies, measures of heat generated by the compressor motor 316 for the switching frequencies, and the total heat generated between the inverter 320 and the compressor motor 316 for the switching frequencies. In some embodiments, the lookup table may be stored on a non-transitory computer readable medium. The controller 105 may include a hardware processor (not shown) and may be configured to read the lookup table to identify a switching frequency to achieve a desired amount of total heat generation. The controller 105 may control the inverter 320 to have certain switching frequency based on the desired heat generation as recorded in the lookup table.

In another example, the controller 105 may generate heat from the compressor 110 by injecting high frequency current into the compressor 110. High frequency current injection may cause the compressor motor 316 to produce little to no torque, which may result in the scrolls of the scroll portion 312 to remain stationary. For example, and without limitation, current having a frequency of greater than 50 Hz could be injected into the compressor motor 316. In some embodiments, current have a frequency of greater than 100 Hz could be injected into the compressor motor 316. In some embodiments, current having a frequency of greater than 250 Hz could be injected into the compressor motor 316.

The controller 105 may be configured to control the compressor 110 to generate heat using any, all, or a combination of the above-described heat generation techniques. The controller 105 may control the compressor 110 to generate heat using one or more of the above-described heat generation methods to generate heat in accordance with one or more modes. For example, and without limitation, in a waste heat mode, the controller 105 may control the compressor 110 to generate heat by increasing the amount of current drawn by the motor and by optimizing the switching frequency of the inverter. The controller 105 may be configured to cause the compressor 110 to generate heat using one or more of the heat generation techniques described above in accordance with one or more modes, which may correspond to one or more applications of the heat generated by the compressor 110.

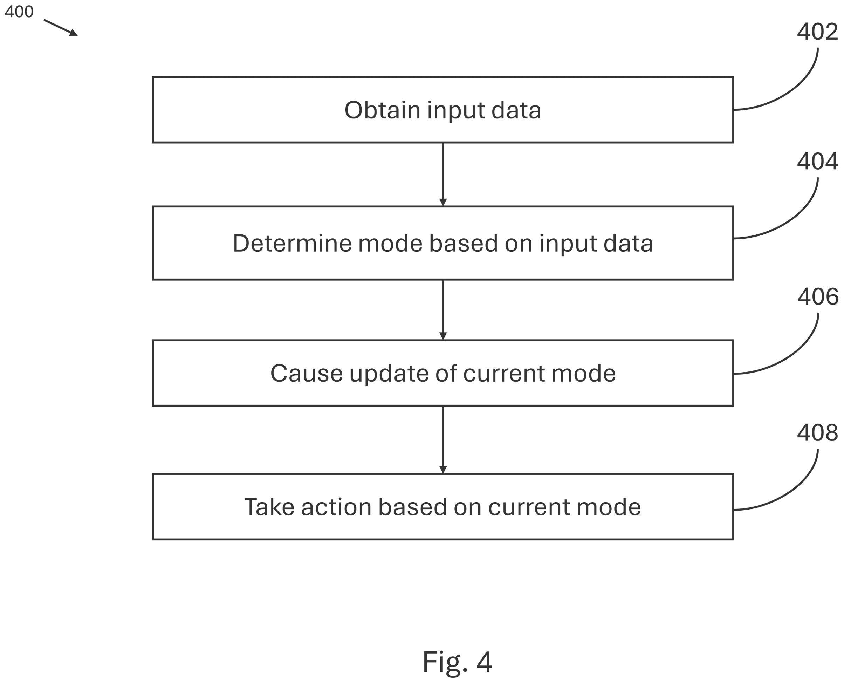

Figure 4 illustrates a flowchart of an example process 400 for a controller 105 to determine a mode and take action based on the current or selected mode. The controller 105 may be configured to activate, enable, update, and/or change to a mode that may correspond to a particular application of heat generated by the compressor 110. For example, and without limitation, the controller 105 may be configured to activate a waste heat mode, as will be described herein, in which the controller 105 may control the compressor 110 to operate inefficiently to generate an amount of heat, and the controller 105 may control the thermal management system 100 to distribute that heat throughout the vehicle, such as to the cabin.

At block 402, the controller 105 may obtain input data. Input data may include operating parameters (e.g., whether the vehicle is charging, in a particular drive mode), sensor information (e.g., temperature information of internal components, an ambient air temperature), and so on. For example, input data may include data from sensors, such as but not limited to the first sensor 112 or the second sensor 114. Input data may include, for example, a temperature and/or a pressure of a fluid 311 as it enters or exits the compressor 110. Input data may include information about the fluid 311, such as the type of fluid (e.g., type of refrigerant). Input data may include information about the environment, such as the ambient temperature and/or ambient pressure. Input data may include any other data or information collected by any other sensor on the vehicle and/or determined by the controller 105. For example, and without limitation, input data may include whether the battery 128 is charging or is about to be charged.

In some embodiments, the input data may include the configuration of the valve 124. For example, the input data may include whether the one or more coolant loops are operating in a series mode or in a parallel mode. Input data may include information received from a user interface of the vehicle. Input data can include whether the vehicle is navigating to a location, a distance until the location, expected weather during a trip, locations and distances to chargers, whether the vehicle is charging, and so on. Input data can include whether the compressor is operating in an efficient mode or an inefficient mode, and if the compressor is operating in an inefficient mode, the methods by which the compressor is being controlled to generate heat.

At block 404, the controller 105 may determine one or more modes based at least in part on the input data. The one or more modes may correspond to different applications of heat generated by the compressor. For example, and without limitation, these modes may include a waste heat mode, a TIM health detection mode, a liquid reduction mode, and/or a liquid pump out mode, as will be described herein. In any of these modes, the controller 105 can control the compressor 110 to operate inefficiently, or in an excess heat mode, to increase the portion of the electrical power provide to the compressor 110 that is dissipated as heat due to losses.

In a waste heat mode, the controller 105 may be configured to control the vehicle thermal management system 100 to supplement its heating capacity with waste heat generated by the compressor 110.

In a TIM health detection mode, waste heat generated by the compressor 110 may be used to test the health of the TIM 318. For example, and without limitation, after the compressor 110 is manufactured, TIM health detection mode may be utilized to generate heat from the compressor to test the quality of the TIM 318. In another example, and without limitation, the TIM 318 may be tested periodically throughout its lifetime to check for degradation or other issues that may arise over time.

In a liquid reduction mode, waste heat generated by the compressor 110 may be used to remove liquid content from the inlet 322 of the compressor 110. For example, the sensor 112 may be configured to measure a temperature and/or pressure of the fluid 311 before it enters the compressor 110. The controller 105 may determine, based at least in part on the sensor information, that a liquid content of the fluid 311 entering the compressor 110 is too high, and may generate waste heat from the compressor 110 to evaporate or reduce the liquid content of the fluid 311 before it enters the compressor 110.

In some embodiments, a liquid pump out mode may be utilized to generate heat from the compressor 110 and turn the motor 316 of the compressor 110 slowly to pump liquid out of the outlet 324 of the compressor 110 (e.g., cause the scrolls to turn at less than a threshold velocity). For example, when the compressor 110 is not operating, the fluid 311 may condense (e.g., in cold ambient temperatures) and form liquid within the compressor 110. The condensed liquid in the compressor 110 may damage the compressor 110 when the compressor 110 begins or resumes operation. In a liquid pump out mode, the controller 105 may be configured to control the compressor 110 to generate waste heat and to slowly spin the motor 316 of the compressor 110 to remove the liquid from the compressor 110 to avoid damaging the compressor 110.

At block 406, the controller 105 may cause the vehicle thermal management system 100 to update the current mode to the determined mode that is determined based at least in part on the input data.

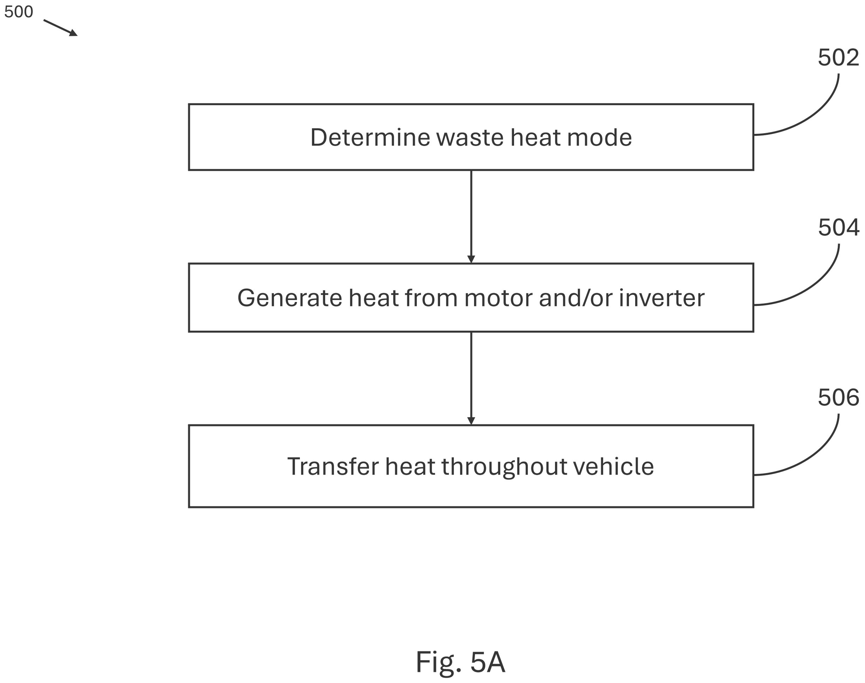

At block 408, the controller may take action based on the current mode. For example, the controller 105 may cause the compressor 110 to generate waste heat in accordance with the current mode. The following Figures 5A-8B will describe the various actions that the thermal management system 100 may take in accordance with the current mode.

The controller 105 may be configured to operate one or more modes simultaneously. For example, and without limitation, the controller 105 may be configured to cause the vehicle thermal management system 100 to be in a waste heat mode and a liquid reduction mode simultaneously.

Figure 5A illustrates a flowchart of an example process by a controller 105 for a waste heat mode. At block 502, the controller 105 may determine that the thermal management system 100 will enter waste heat mode. The controller 105 may determine to enter a waste heat mode if, for example, the ambient temperature is below a threshold and the thermal management system 100 cannot source enough heat from the powertrain to sufficiently heat the cabin and/or the battery 128 (greater than a threshold or thresholds).

At block 504, the controller 105 may control the compressor 110 to generate heat for use in a waste heat mode. The controller 105 may control the compressor motor 316 and/or the inverter 320 to generate heat using one or more of the methods of generating heat described above. For example, the controller 105 may control the compressor 110 to draw additional current while maintaining a substantially constant torque. In some embodiments, the controller 105 may control the inverter 320 to adjust its switching frequencies to generate waste heat. In some embodiments, the controller 105 may cause high frequency current to be injected into the compressor 110 to generate waste heat.

At block 506, the controller 105 may control the vehicle thermal management system 100 to transfer the heat throughout the vehicle. For example, the controller 105 may control the vehicle thermal management system 100 to transfer the generated heat to the cabin, the battery 128, or the powertrain. The controller 105 may be configured to transfer heat throughout the vehicle via the heat pump system 210 and/or the one or more coolant loops.

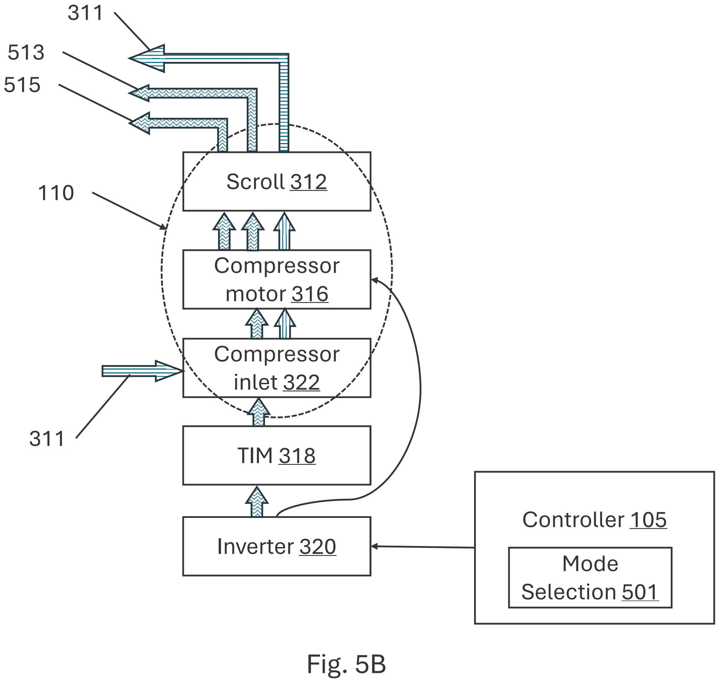

Figure 5B illustrates an example of heat and fluid flowing through a compressor in a waste heat mode. For example, fluid 311 may be configured to enter the compressor through the compressor inlet 322, and to travel through the compressor 110, through the scroll portion 312 of the compressor 110, and out of the compressor outlet 324. As the fluid 311 passes through the compressor 110, the fluid 311 may receive heat generated by the compressor 110.

For example, the controller 105 may control the inverter 320 to generate heat 513, for example by controlling the switching frequency. The heat 513 generated by the inverter may transfer through the TIM 318, through the compressor body, and into the fluid 311 as the fluid 311 passes through the compressor 110.

In some embodiments, in a waste heat mode, the controller 105 may be configured to cause the compressor motor 316 to generate waste heat 515 (e.g., by drawing additional current, or by injecting high frequency current). The heat 515 generated by the compressor motor 316 may be absorbed by the fluid 311 as the fluid 311 passes through the compressor 110.

Accordingly, when the fluid 311 exits the compressor 110, the fluid 311 may have received heat generated by the inverter 320 and/or the compressor motor 316. This waste heat can be transferred throughout the vehicle via the thermal management system 100, via the heat pump system 210 and/or the one or more coolant loops.

The controller 105 may be in electrical communication with the inverter 320 and/or the compressor motor 316, and the inverter 320 may be in electrical communication with the compressor motor 316. The controller 105 may include a mode selection module 501, which may determine and/or receive the one or more modes that the vehicle thermal management system 100 will or is operating in. For example, the mode selection module 501 may be configured to perform the process described in Figure 4.

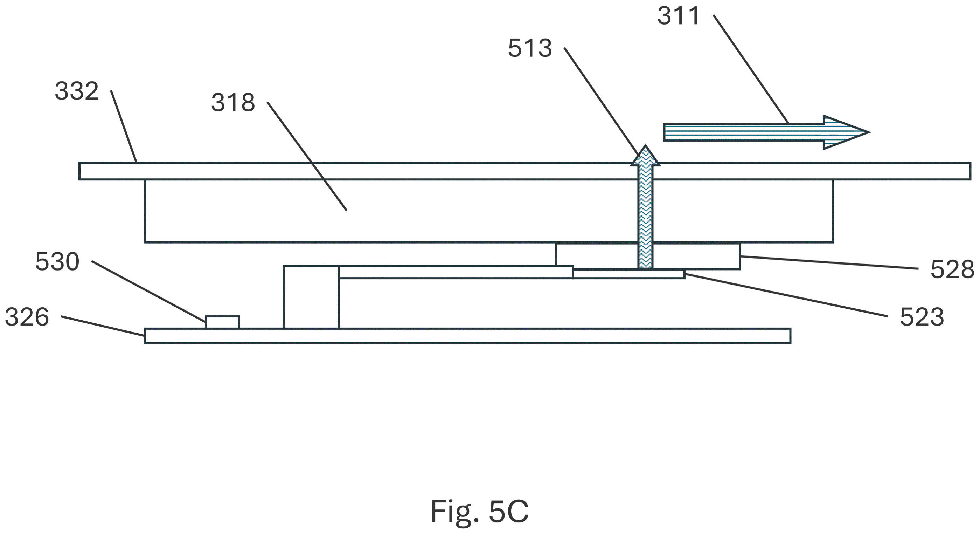

Figure 5C illustrates a section view of an example heat and refrigerant flow through an example inverter 320 in waste heat mode. In some embodiments, a die 523 of the inverter 320 may contain one or more MOSFETS 321, which may be used to generate heat 513. Heat 513 may transfer to a heat spreader 528 and/or through a TIM 318 towards a compressor body 332 of the compressor 110. The heat 513 may then be transferred to the fluid 311 flowing through the compressor 110. In some embodiments, the die 523 may be supported by a PCB 326, which may also contain a sensor 530. The sensor 530 may be a thermistor which may be configured to measure temperature. In some embodiments, the sensor 530 can be used to test the health of the TIM 318, as will be described herein.

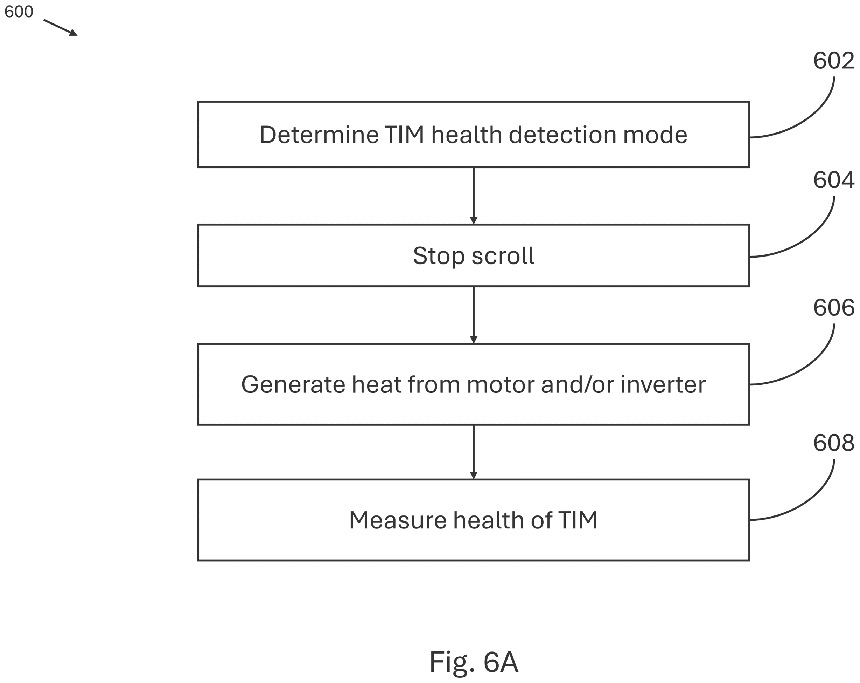

Figure 6A illustrates a flowchart of an example process by a controller 105 for a TIM health detection mode. At block 602, the controller 105 may determine that the vehicle thermal management system 100 will enter TIM health detection mode. TIM health detection mode may be utilized to measure the health of the TIM 318. In a TIM health detection mode, various methods may be used, as described herein, to generate heat in the inverter 320, and measure how the TIM 318 responds to the generated heat to measure the health and/or functionality of the TIM 318. TIM health detection mode may be triggered manually, for example by instructing the vehicle to test the health of the TIM 318 via a button or a user interface. In some embodiments, TIM health detection mode may be triggered automatically, such as when the TIM 318 is first installed, after a certain period of time, or after a specified event occurs, and so on.

At a block 604, after TIM health detection mode is determined, the controller 105 may control the compressor motor 316 to stop spinning. In other words, the controller 105 may control the scrolls of the scroll portion 312 to stop spinning or moving relative to each other. Stopping the scroll portion 312 from spinning may stop fluid 311 (e.g., refrigerant) from flowing through the heat pump system 210. It may be advantageous to stop the scroll portion 312 from spinning to prevent the fluid 311 from cooling the inverter 320 and the TIM 318 during a TIM health detection test. For example, preventing the fluid 311 from cooling the inverter 320 may allow the inverter 320 to reach a higher temperature in a shorter amount of time, which may allow the health of the TIM 318 to be tested faster. In some embodiments, in a TIM health detection mode, the compressor 110 may be configured to operate 100% inefficiently or approximately 100% inefficiently, meaning that all or nearly all the electrical power supplied to the compressor 110 can be dissipated as heat, with little or no mechanical output from the compressor motor 316.

At a block 606, the controller 105 may control the compressor motor 316 and/or the inverter to generate heat. In a TIM health detection mode, the controller 105 may use any of the method described herein to cause the compressor 110 to generate heat.

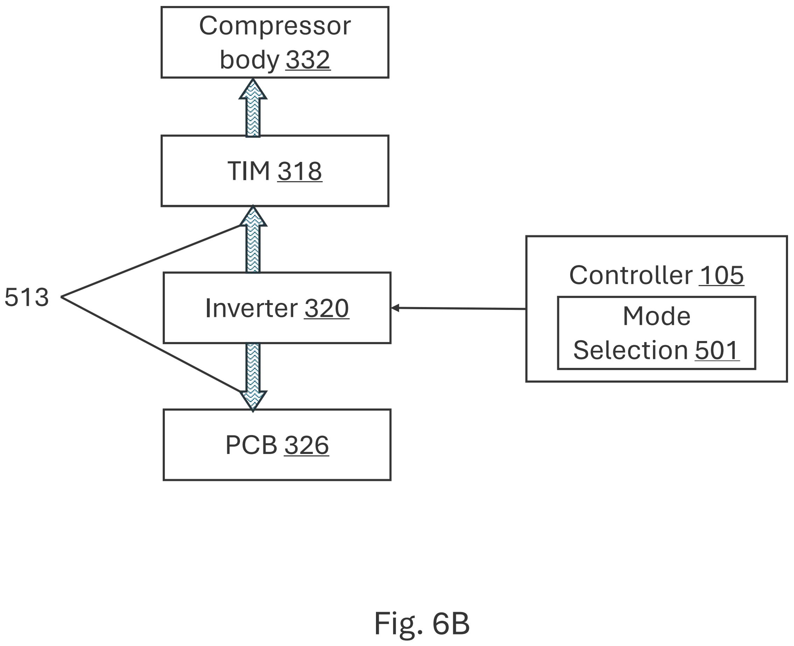

At block 608, the controller 105 may measure the health of the TIM 318, as will be described below with respect to Figure 6B.

Figure 6B illustrates an example heat flowing through an example compressor 110 in TIM health detection mode. The controller 105 may be configured to control the compressor 110 to stop spinning, thereby stopping the flow of fluid 311 through the compressor. The controller 105 may control the inverter 320 to generate heat (e.g., by controlling the switching frequencies). This configuration, in which the compressor motor 316 does not rotate and the compressor generates waste heat, may be referred to as stationary waste heat mode.

The controller 105 may control the transistors in the inverter 320 to generate waste heat. This heat may be transferred in two directions, through the TIM 318 and into the compressor body 332, and into the PCB 326.

In some embodiments, the controller 105 may be in electrical communication with the inverter 320. The controller 105 may include a mode selection module 501, which may determine and/or receive the one or more modes that the vehicle thermal management system 100 will or is operating in. For example, the mode selection module 501 may be configured to perform the process described in Figure 4.

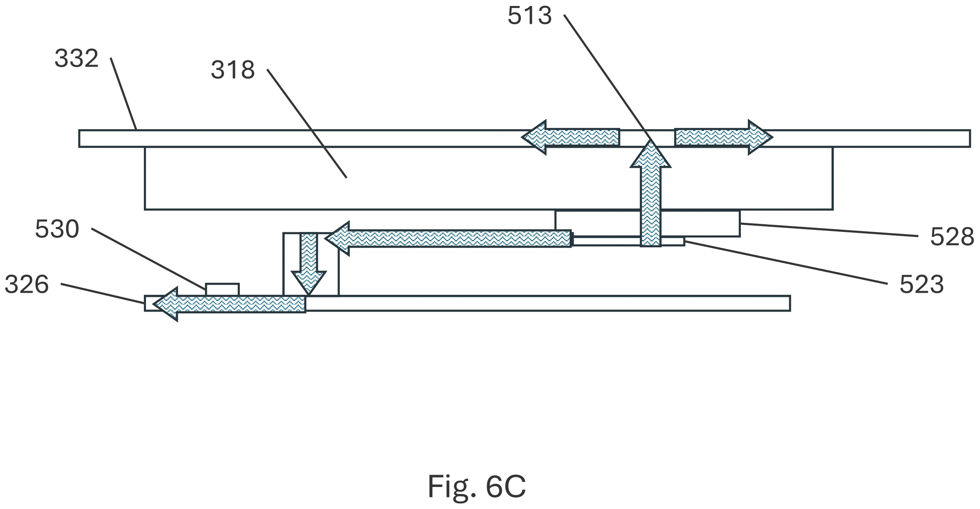

Figure 6C illustrates a section view of an example heat flowing through an example inverter 320 in TIM health detection mode. In some embodiments, heat may be generated from the die 523 of the MOSFETs 321. The heat 513 may travel in two directions: (1) through a heat spreader 528, through the TIM 318, and to the compressor body 332, and (2) to the PCB 326. The PCB 326 may include a sensor 530, which may be configured to measure a temperature at that location. The controller 105 may determine the health of the TIM 318 using the sensor 530 on the PCB 326 by measuring an increase in temperature during a test run during the TIM waste heat mode.

The health of the TIM 318 can be measured using one or more methods. In an example method of determining TIM 318 health, the sensor 530 may be used to measure the temperature before waste heat is generated using TIM health detection mode and after waste heat is generated using TIM health detection mode. The health of the TIM 318 may be determined by analyzing the temperature rise measured by the sensor 530 from the heat generated from TIM health detection mode. This temperature rise may be compared to a threshold value to determine whether the TIM 318 is healthy.

For example, without limitation, the sensor 530 may measure an ambient temperature before the thermal management system 100 enters TIM health detection mode. During TIM health detection mode, the controller 105 can control the inverter 320 to generate waste heat, and the controller 105 can control the sensor 530 to measure the temperature during or after waste heat is generated. The difference between the ambient temperature before the waste heat is generated, and the temperature after the waste heat is generated, may be referred to as the temperature differential, or temperature increase, during TIM health detection mode. The controller 105 can be configured to compare the temperature differential to a threshold value to determine the health of the TIM. If the temperature differential measured at the sensor 530 on the PCB 326 is greater than a threshold value, it may indicate that the TIM 318 is not effectively transferring heat away from the inverter 320 and into the compressor body 332.

For example, and without limitation, the temperature rise may be 23 °C, meaning that after excess heat was generated in the TIM health detection mode, the temperature measured by the sensor 530 increased by 23 °C. If a threshold value for the TIM 318 to determine that the TIM 318 is healthy is 25 °C, then the controller 105 may determine that the TIM 318 is healthy. If, on the other hand, the temperature rise is measured to be 27 °C, then this may indicate that the TIM 318 is not healthy and may need to be repaired or replaced. In other words, the TIM 318 may not be healthy if it is not effectively transferring heat away from the inverter 320 and towards the compressor body 332.

This test may be performed when the compressor 110 is manufactured to check the quality of the TIM 318. In some embodiments, the health of the TIM 318 may be measured one or more times throughout the life of the TIM 318 to measure its health. In some embodiments, the controller 105 may configured to activate or enable the TIM health detection mode based on an input from a user. In some embodiments, the controller 105 may be configured to activate or enable the TIM health detection mode at predetermined time intervals. In some embodiments, the controller may be configured to activate or enable the TIM health detection mode based on the occurrence of an event, such as when the vehicle has traveled a certain number of miles. The threshold value(s) may be recorded or saved on a non-transitory computer readable medium.

There are a multitude of example techniques by which the controller 105 can measure the health of the TIM 318 using waste heat generated by the compressor 110. For example, the health of the TIM 318 can be determined based on measuring a thermal resistance of the TIM 318. For example, and without limitation, a thermal resistance of the TIM 318 may be calculated by measuring a first temperature from a sensor 530 on the PCB 326. A second temperature may be measured of the fluid 311 passing through the compressor 110. The second temperature may be measured by a second thermistor (not shown) on or near the compressor 110. The second temperature may be subtracted from the first, and this difference may be divided by the rate of heat generation by the inverter 320 to determine a thermal resistance of the TIM 318. The calculated thermal resistance of the TIM 318 can be compared to a threshold value to ensure that the TIM 318 is healthy. For example, and without limitation, the controller 105 may determine that a TIM 318 is healthy if the calculated thermal resistance is lower than a certain threshold value. The threshold value(s) may be recorded or saved on a non-transitory computer readable medium.

In some embodiments, the health of the TIM 318 can be determined based on measuring the thermal resistance of the TIM 318 when fluid 311 is not flowing through the compressor 110. For example, and without limitation, heat can be generated in the inverter 320 and/or the compressor motor 316. Heat can be generated in the compressor motor 316 without causing the scroll portion 312 to spin by injecting high frequency current into the compressor motor 316. A first temperature can be measured with a sensor 530 on the PCB 326. A second temperature of the ambient can be measured using a second thermistor (not pictured). The second temperature can be subtracted from the first temperature, and this difference can be divided by the rate of heat generation by the inverter 320 to determine a thermal resistance of the TIM 318. The calculated thermal resistance of the TIM 318 can be compared to a threshold value to measure the health of the TIM 318. For example, and without limitation, the controller 105 may determine that the TIM 318 is healthy if the calculated thermal resistance is lower than a threshold value. The threshold value(s) may be recorded or saved on a non-transitory computer readable medium.

The controller 105 can be configured to display the result of the TIM health detection test to the user. For example, the controller 105 can be configured to display the results of a TIM health detection test via a user interface (e.g., a user interface on a display in a vehicle). In some embodiments, depending on the results of the TIM health detection test, the controller 105 may be configured to alert a user that a TIM 318 is faulty and needs to be replaced, or that the TIM 318 is healthy.

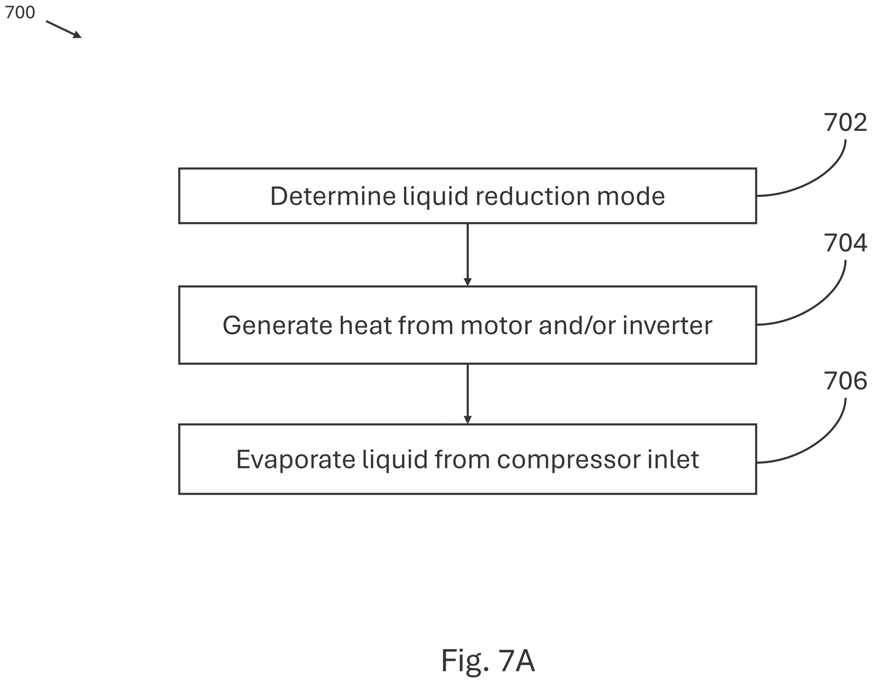

Figure 7A illustrates a flowchart of an example process for a liquid reduction mode. The process may be performed, for example, by controller 105. A liquid reduction mode may be used to evaporate or reduce the amount of liquid content entering the compressor 110. A compressor 110 may only be capable of receiving a certain amount of liquid content before the compressor malfunctions or breaks. Accordingly, in a liquid reduction mode, the controller 105 can control the compressor 110 to generate waste heat to evaporate or reduce liquid content in the fluid 311 before or as the fluid 311 passes through the compressor 110.

At block 702, the controller 105 may determine that the vehicle thermal management system 100 will enter liquid reduction mode. In some embodiments, the controller 105 may enter liquid reduction mode if one or more sensors near the compressor inlet and/or outlet determine that the fluid 311 entering or exiting the compressor 110 has a temperature and/or pressure that is above or below a threshold temperature and/or pressure. The controller 105 may use temperature and/or pressure thresholds to determine whether there is too much liquid entering or exiting the compressor 110.

For example, the first sensor 112 may indicate that the fluid upstream from the compressor 110 has a first temperature and/or pressure. The controller 105 may determine whether that first temperature and/or pressure is above or below a threshold temperature and/or pressure. The threshold temperature and/or pressure may be a temperature and/or pressure that indicates whether the fluid likely has an amount of liquid content that can safely pass through the compressor 110 without damaging the compressor 110. The threshold temperature and/or pressure may correspond to the specific type of fluid 311 used. For example, different types of refrigerant may have different threshold temperatures and/or pressures that may be indicative of a liquid content that is too high to safely pass through the scroll. If the controller 105 determines that a threshold temperature and/or pressure has been reached, or is likely to be reached, the controller 105 may control the thermal management system 100 to enter liquid reduction mode.

At block 704, the controller 105 may control the compressor motor 316 and/or the inverter 320 to generate waste heat. The controller 105 can control the compressor 110 to generate waste heat using any of the waste heat generation methods described herein.

At block 706, the waste heat generated by the compressor 110 may help to evaporate or reduce the liquid content of the fluid 311 before the fluid 311 enters the scroll portion 312 of the compressor 110.

In some embodiments, liquid reduction mode may be activated in concurrence with waste heat mode. For example, the controller 105 may control the compressor 110 to generate waste heat that can be circulated throughout the vehicle by the thermal management system 100, and that can also be used to reduce the liquid content of the fluid 311 passing through the compressor.

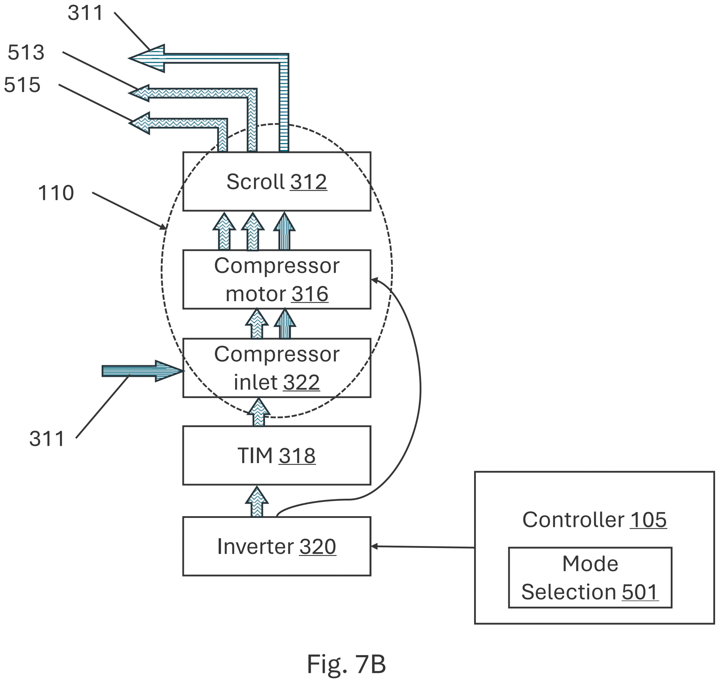

Figure 7B illustrates an example of heat and fluid flowing through a compressor in a liquid reduction mode. For example, fluid 311 may be configured to enter the compressor through the compressor inlet 322, and to travel through the compressor 110, through the scroll portion 312 of the compressor 110, and out of the compressor outlet 324. As the fluid 311 passes through the compressor 110, the fluid 311 may receive heat generated by the compressor 110.

For example, the controller 105 may control the inverter 320 to generate heat 513, for example by controlling the switching frequency. The heat 513 generated by the inverter may transfer through the TIM 318, through the compressor body, and into the fluid 311 as the fluid 311 passes through the compressor 110.

In some embodiments, the controller 105 may be configured to cause the compressor motor 316 to generate waste heat 515 (e.g., by drawing additional current, or by injecting high frequency current). The heat 515 generated by the compressor motor 316 may be received by the fluid 311 as the fluid 311 passes through the compressor 110. As the fluid 311 receives the heat 515 from the compressor, the liquid content of the fluid 311 may evaporate, which may allow the fluid 311 to safely pass through the scroll portion 312 of the compressor 110 without causing damage to the compressor 110.

The controller 105 may be in electrical communication with the inverter 320 and/or the compressor motor 316, and the inverter 320 may be in electrical communication with the compressor motor 316. The controller 105 may include a mode selection module 501, which may determine and/or receive the one or more modes that the vehicle thermal management system 100 will or is operating in. For example, the mode selection module 501 may be configured to perform the process described in Figure 4.

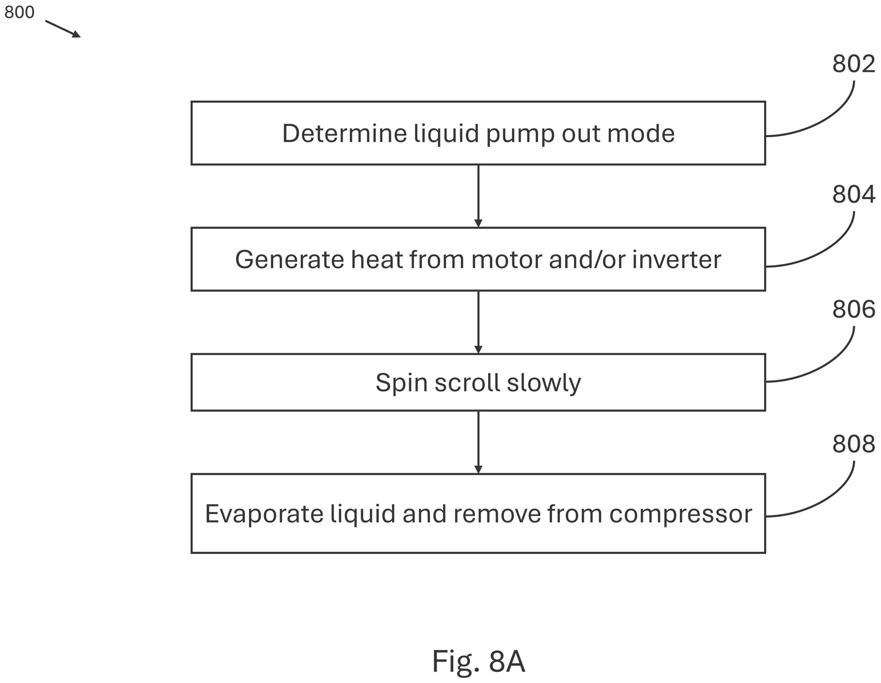

Figure 8A illustrates a flowchart of an example process for a liquid pump out mode. The process may be performed, for example, by controller 105.

A liquid pump out mode can be used to evaporate or remove any liquid that may have condensed or formed in the compressor when the compressor was not operating, for example in cold temperatures. The controller 105 may control the thermal management system 100 to enter liquid pump out mode if the controller 105 determines that liquid either has or likely has accumulated in the compressor 110 while the compressor 110 is not operating. For example, and without limitation, this may occur if refrigerant remained in or migrated to the compressor 110 after the compressor 110 stopped operating, and that refrigerant condensed to have a liquid content. The refrigerant may condense in either the scroll portion 312, near the compressor motor 316, or in any part of the compressor 110. This liquid content may be harmful to the compressor 110 when the compressor 110 starts operating again and the fluid 311 passes through the scroll portion 312.

In a liquid pump out mode, the controller 105 may control the inverter 320 and/or the compressor motor 316 to generate excess heat, using any one or more of the aforementioned heat generation methods. The controller 105 may control the compressor motor 316 to spin the scrolls of the scroll portion 312 slowly to pump fluid out of the scroll portion 312. Liquid pump out mode may be used before running the compressor motor 316 at a higher speed to ensure that any liquid that may have condensed in the compressor 110 is pumped out before the compressor 110 runs at full speed again.

At block 802, the controller 105 may determine that the vehicle thermal management system 100 will enter liquid pump out mode. The controller 105 may receive information from one or more sensors to determine whether there is likely liquid in the compressor. For example, the controller 105 may receive information from a first sensor 112 proximal to the compressor inlet 322 or a second sensor 114 proximal to the compressor outlet 324 to determine whether there is likely an amount of liquid in the compressor 110 that could be unsafe for the compressor.

At block 804, the controller 105 may control the inverter 320 and/or the compressor motor 316 to generate excess heat. The controller 105 can control the compressor 110 to generate heat using any of the methods of heat generation described herein.

At block 806, the controller 105 may cause the scrolls of the scroll portion 312 to spin slowly (e.g., less than a threshold measure). For example, the controller 105 may control the compressor motor 316 to spin slowly, thereby causing the scroll portion 312 of the compressor 110 to spin slowly. Spinning the scroll slowly may assist in removing fluid 311 from the compressor that has condensed and has a high liquid content without damaging the compressor 110. As the controller 105 determines that there is likely a safe amount of liquid in the fluid 311, the compressor may allow the compressor motor 316 to operate at its normal speed.

At block 808, the excess heat from the inverter and/or the motor may cause some or all of the liquid in the fluid 311 to evaporate. The slowly-spinning scroll may then slowly pump that fluid out of the compressor 110. The controller 105 may cause or allow the compressor motor 316 to move at a higher speed after any condensed liquid content has been removed from the compressor 110. For example, a sensor at the inlet and/or the outlet of the compressor 110, such as the first sensor 112 or the second sensor 114, may be used to measure the temperature and/or pressure of the fluid 311 as it enters/exits the compressor 110. A measured temperature and/or pressure at the outlet 324 of the compressor 110 may be compared to a threshold value to determine whether there is still likely liquid content in the fluid 311. If the controller determines, based at least in part on the information from the sensor, that there is still liquid content in the scroll portion 312, then the controller 105 may keep the system in liquid pump out mode. If the controller 105 determines, based at least in part on the information from the sensor, that there is no liquid content in the scroll portion 312, or an amount that is below a threshold value, then the controller 105 may allow the compressor motor 316 to cause the scroll portion 312 to spin at a higher speed, and/or exit the liquid pump out mode.

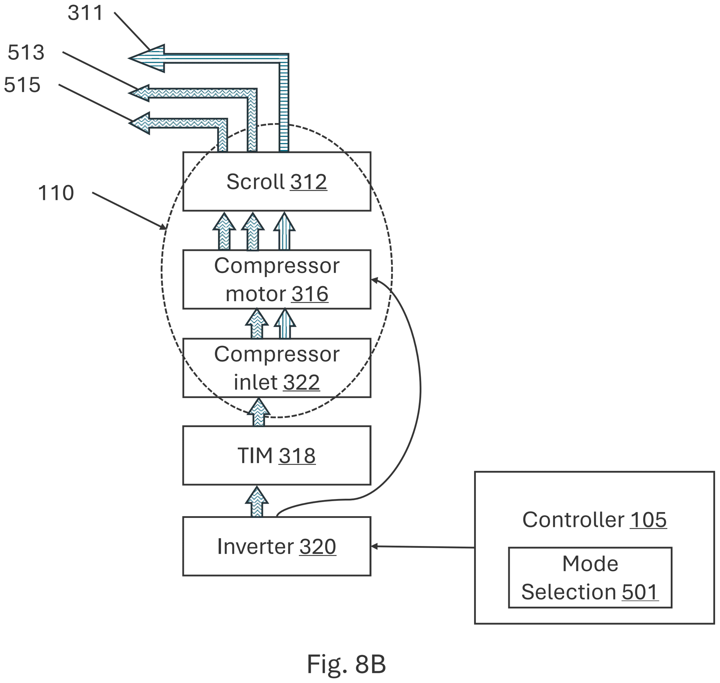

Figure 8B illustrates an example heat and refrigerant flow through an example compressor 110 in liquid pump out mode. For example, the controller 105 may control the inverter 320 to generate heat 513, for example by controlling the switching frequency. The heat 513 generated by the inverter may transfer through the TIM 318, through the compressor body, and into the fluid 311 as the fluid 311 passes through the compressor 110.

In some embodiments, the controller 105 may be configured to cause the compressor motor 316 to generate waste heat 515 (e.g., by drawing additional current, or by injecting high frequency current). The heat 515 generated by the compressor motor 316 may be received by the fluid 311 as the fluid 311 is removed from the compressor 110. As the fluid 311 receives the heat 515 from the compressor, the liquid content of the fluid 311 may evaporate, which may allow the fluid 311 to safely pass through the scroll portion 312 of the compressor 110 without causing damage to the compressor 110.

The controller 105 may be in electrical communication with the inverter 320 and/or the compressor motor 316, and the inverter 320 may be in electrical communication with the compressor motor 316. The controller 105 may include a mode selection module 501, which may determine and/or receive the one or more modes that the vehicle thermal management system 100 will or is operating in. For example, the mode selection module 501 may be configured to perform the process described in Figure 4.

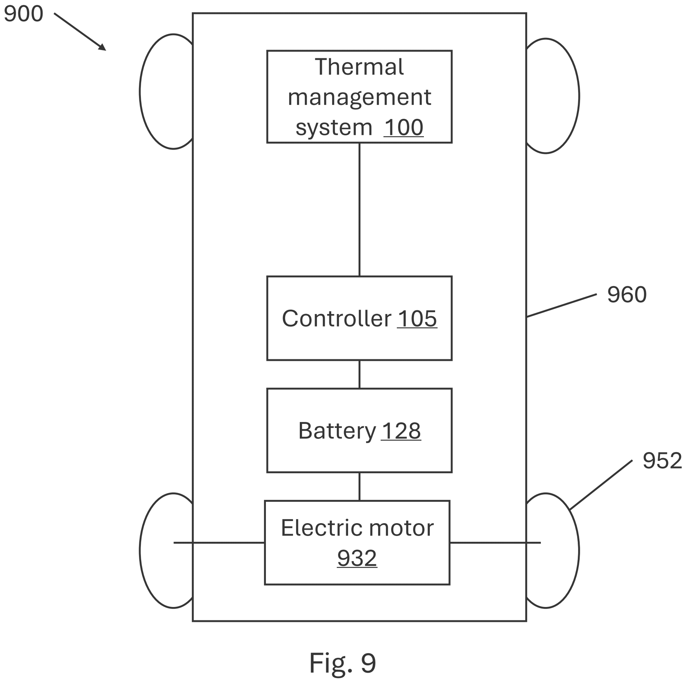

Figure 9 illustrates a block diagram of a vehicle 900. The vehicle 900 may include a vehicle body 960 and one or more electric motors 932 which cause movement of the vehicle via one or more wheels 952. The electric motors 932 may include, for example, induction motors, permanent magnet motors, and so on. A battery 128 (e.g., one or more battery packs each comprising a multitude of batteries) may be used to power the electric motors 932 as is known by those skilled in the art, and any other components of the vehicle 900.

The vehicle 900 may include a thermal management system 100. The thermal management system can include any of the components and functionalities disclosed herein, such as but not limited to a heat pump system 210 and one or more coolant loops. The thermal management system 100 can include a compressor 110, which can be controlled by a controller 105 to generate waste heat using any of the methods of heat generation described herein. The controller 105 can control the thermal management system 100 to operate in any of the methods disclosed herein, such as but not limited to a waste heat mode, a TIM health detection mode, a liquid reduction mode, and/or a liquid pump out mode.

It is appreciated that the methods described herein can have applications outside the context of vehicles. Other types of heating systems that include a compressor can be controlled to generate and apply waste heat as described herein. For example and without limitation, there may be applications in the aerospace industry, such as in rockets. Residential and industrial heating systems can also be controlled to generate and apply waste heat using the methods described herein.

The foregoing disclosure is not intended to limit the present disclosure to the precise forms or particular fields of use disclosed. As such, it is contemplated that various alternative embodiments and/or modification to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosure. It is to be understood that the forms of disclosure herein shown and described are to be taken as representative embodiments. Equivalent elements, or materials may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

Additionally, numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed in certain cases, as is useful in accordance with a particular application.

## Claims

1. A vehicle thermal management system, comprising:
an inverter;
a compressor in communication with the inverter, the compressor comprising:
a compressor inlet configured to receive fluid;
a compressor outlet configured to output the fluid; and
a motor configured to cause the fluid to be compressed; and
a controller in communication with the inverter and the compressor, the controller configured to:
receive input data, wherein the input data comprises a temperature or a pressure associated with the compressor; and
cause the compressor to operate in a mode, based at least in part on the input data, in which at least a portion of electrical energy provided to the compressor is used for generating heat.

2. The vehicle thermal management system of Claim 1, wherein the mode is one of a plurality of modes including a waste heat mode, a thermal interface material health detection mode, a liquid reduction mode, and a liquid pump out mode.

3. The vehicle thermal management system of Claim 1 or 2, wherein the compressor is in fluidic communication with a refrigerant loop, and wherein the refrigerant loop is in thermal communication with a coolant loop.

4. The vehicle thermal management system of one of the preceding claims, further comprising a first sensor proximal to the compressor and a second sensor distal to the compressor.

5. The vehicle thermal management system of Claim 2 and one of the preceding claims, wherein the compressor includes a plurality of scrolls, and
wherein the liquid pump out mode comprises:
causing the motor included in the compressor to generate a first source of waste heat;
causing the inverter to generate a second source of waste heat; and
spinning the plurality of scrolls at less than a threshold velocity, and/or wherein
the liquid reduction mode comprises:
causing the motor included in the compressor to generate a first source of waste heat; and
causing the inverter to generate a second source of waste heat;
wherein the first source of waste heat and the second source of waste heat are sufficient to evaporate a liquid content of the fluid within the compressor before the fluid reaches the plurality of scrolls; and/or
the thermal interface material health detection mode comprises:
stopping the plurality of scrolls from spinning;
causing the inverter to generate waste heat;
using a measured inverter temperature to calculate a first value; and
comparing the first value to a threshold value to determine a health of a thermal interface material.

6. The vehicle thermal management system of Claim 2 and one of the preceding claims, wherein the waste heat mode comprises:
causing the motor included in the compressor to generate a first source of waste heat;
causing the inverter to generate a second source of waste heat; and
controlling the thermal management system to transfer the first source of waste heat and the second source of waste heat to a cabin of the vehicle.

7. The vehicle thermal management system of one of the preceding claims, wherein the inverter is configured to generate waste heat by changing a switching frequency of the inverter, and wherein the motor included in the compressor is configured to generate waste heat through flux weakening or flux strengthening.

8. The vehicle thermal management system of one of the preceding claims, wherein the thermal interface material health detection mode further comprises accessing, via the controller, a lookup table to determine a switching frequency associated with generating waste heat.

9. The vehicle thermal management system of Claim 8, wherein the lookup table is configured to correlate individual switching frequencies with individual measures of waste heat, and wherein the individual measures of waste heat include waste heat generated by the compressor and the inverter.

10. A method implemented by a controller associated with controlling a compressor configured for use as part of a thermal management system of a vehicle, the method comprising:
receiving input data reflecting a temperature or pressure associated with a compressor,
a temperature associated with an inverter, or a temperature associated with an environment, wherein:
the compressor comprises a compressor inlet configured to receive fluid, a compressor outlet configured to output the fluid, and a motor, and
the inverter comprises a thermal interface material; and
causing the compressor to operate in a mode, based at least in part on the input data,
in which at least a portion of electrical energy provided to the compressor is used for generating heat.

11. The method of Claim 10, wherein the mode is one of a plurality of modes including a waste heat mode, a thermal interface material health detection mode, a liquid reduction mode, and a liquid pump out mode.

12. The method of Claim 11, wherein the compressor includes a plurality of scrolls, and
wherein the thermal interface material health detection mode comprises:
stopping the plurality of scrolls from spinning;
causing the inverter to generate waste heat; and
comparing a temperature value associated with the inverter to a threshold value to
determine the health of the thermal interface material, and/or
wherein the liquid pump out mode comprises:
causing the motor included in the compressor to generate a first source of waste heat;
causing the inverter to generate a second source of waste heat; and
spinning the plurality of scrolls slowly, and/or
wherein the liquid reduction mode comprises:
causing the motor included in the compressor to generate a first source of waste heat; and
causing the inverter to generate a second source of waste heat;
wherein the first source of waste heat and the second source of waste heat are sufficient to evaporate a liquid content of the fluid within the compressor before the fluid reaches the plurality of scrolls.

13. The method of claim 11 or 12, wherein the waste heat mode comprises:
causing the motor included in the compressor to generate a first source of waste heat;
causing the inverter to generate a second source of waste heat; and
controlling the thermal management system to transfer the first source of waste heat and second source of waste heat to a cabin of the vehicle.

14. The method of one of Claims 11 to 13, wherein causing the inverter to generate waste heat comprises changing a switching frequency of the inverter, and causing the motor included in the compressor to generate waste heat comprises flux weakening or flux strengthening.

15. The method of one of Claims 11 to 14, further comprising accessing, via the controller, a lookup table to determine a switching frequency associated with waste heat generation, preferably wherein the lookup table is configured to correlate individual switching frequencies with individual measures of waste heat, and wherein the individual measures of waste heat include waste heat generated by the compressor and the inverter.
